# DEMANDE DE BREVET EUROPEEN

(11) **EP 1 852 235 A1**
(43) Date de publication de la demande: **07.11.2007**
(21) Numéro de dépôt: 06113344.3
(22) Date de dépôt: 01.05.2006
(51) Int. Cl.: B29C 31/04, B29C 43/34

(54) **Dispositif et procédé pour la manipulation d'une dose de matière plastique à l'état fondu**

(71) Demandeur: Aisapack Holding SA, 1896 Vouvry (CH)
(72) Inventeur: Hanot, Dominique, 1896, Vouvry (CH)
(74) Mandataire: Grosfillier, Philippe

(57) **Abrégé**

L'invention concerne un dispositif de moulage d'un article en matière plastique dans lequel l'article est obtenu par la compression d'une dose de matière plastique (3) à l'état fondu entre les deux parties d'un moule, comprenant au moins une alimentation de matière plastique (1), une tige (11) coulissant dans une douille (8) adaptée pour supporter temporairement ladite dose de matière plastique (3) , un moule de tête d'article (6,7), un mandrin (18) coopérant avec ledit moule (6,7), la douille (8) comportant une face supérieure (16) et une paroi latérale (17) ; le dispositif étant caractérisé par le fait qu'il comprend des moyens de dépôt de la dose sur la douille (1,2) qui sont adaptés de manière à ce que la quantité de matière plastique (22) disposée au-dessus d'un plan (20) coïncidant avec la face supérieure (16) de la douille (8) se situe entre 20% et 40% de la masse totale de la dose (3).
L'invention concerne également un procédé utilisant le dispositif précité.

## Description

### Domaine de l'invention

La présente invention concerne le moulage par compression d'articles en matière plastique dans lequel un article est obtenu par compression d'une dose de matière plastique à l'état fondu entre les deux parties d'un moule.

La présente invention s'applique plus particulièrement à la réalisation de tubes en matière plastique par ex. dentifrices ou cosmétiques, le tube étant formé d'un corps cylindrique souple lié à une tête comprenant une épaule et un orifice. Dans ce cas particulier, la tête du tube est formée et simultanément soudée au corps en une opération. La tête du tube est réalisée à partir d'une dose de matière fondue formée et comprimée entre un outillage inférieur appelé ensemble matrice et un outillage supérieur appelé mandrin sur lequel est emmanché le corps cylindrique souple. La température de la matière est telle qu'elle se soude au corps du tube. Dans une machine de production de tubes, plusieurs moules sont généralement animés d'un mouvement discontinu (ou continu), chaque moule subissant les différentes étapes du procédé (charge du corps de tube, dépose de la dose de matière plastique, compression moulage, refroidissement, démoulage et décharge du tube).

### Etat de la technique

Des dispositifs et des procédés de réalisation de tels tubes sont connus dans l'état de la technique.

A titre d'exemple, on peut citer la demande DE 103 49 837 et le brevet US 4 943 405 dont le contenu est incorporé par référence dans la présente demande pour ce qui concerne la description desdits procédés et dispositifs.

La demande DE 103 49 837 décrit un dispositif et procédé de production de tubes dans lesquels une dose sous forme annulaire est déposée sur un douille faisant office de support intermédiaire et au travers de laquelle une tige est montée coulissante. La tige est maintenue en position haute par l'intermédiaire d'un ressort et est repoussée contre la force du ressort lors de l'introduction du mandrin dans la matrice pour former la tête.

Dans le brevet US 4,943,405, et comme représenté dans la figure 1 de celui-ci, une dose de matière plastique sous forme annulaire est déposée depuis une alimentation sur la face supérieure d'une douille et autour de la tige qui sert à former l'orifice dans l'épaule. La sortie de l'alimentation est entourée par une buse annulaire qui permet la projection d'air sous pression pour séparer la dose déposée de l'alimentation, une fois que la quantité désirée a été déposée. Une fois la dose déposée sur la douille, l'on retire l'alimentation et l'on amène un mandrin qui a la forme de l'épaule à créer. La face frontale du mandrin entre en contact avec la face supérieure de la tige et l'ensemble douille-tige est repoussé à l'intérieur des matrices d'épaule et de filetage pour former la tête qui deviendra l'extrémité du tube. Les figures 3 et 4 de ce brevet illustrent cette étape de formation de la tête et de la soudure de celle-ci sur le corps du tube porté par le mandrin. L'orifice de la tête est formé par la tige qui se déplace longitudinalement dans la douille. Lors de cette étape de formation de la tête et déplacement du mandrin dans la matrice, la tige est repoussée axialement dans la douille par le mandrin d'une position haute à une position basse dans laquelle elle sert à former un orifice dans l'épaule en dépassant de la face supérieure de la douille.

Le problème que l'on rencontre dans le brevet US 4,943,405 et la demande DE 103 49 837 est lié au positionnement temporaire de la dose de matière plastique sur la douille. Suivant la répartition de la matière plastique entre la surface supérieure et la paroi latérale de la douille, la qualité de l'article moulé peut être considérablement améliorée ou dégradée.

Ainsi, l'un des buts de l'invention est d'améliorer les procédés et dispositifs connus.

Plus particulièrement, l'un des buts de l'invention est de proposer un système permettant une répartition adéquate de la matière plastique sur la douille.

Un autre but de l'invention est de proposer un procédé de formation d'épaules de tubes qui est plus efficace que les procédés connus.

### Description générale de l'invention

L'invention concerne donc un dispositif de moulage d'un article en matière plastique dans lequel l'article est obtenu par la compression d'une dose de matière plastique à l'état fondu entre les deux parties d'un moule, comprenant au moins une alimentation de matière plastique, une tige coulissant dans une douille adaptée pour supporter temporairement ladite dose de matière plastique, un moule de tête d'article, un mandrin coopérant avec ledit moule, la douille comportant une face supérieure et une paroi latérale. Le dispositif selon l'invention est caractérisé par le fait qu'il comprend des moyens de dépôt de la dose sur la douille qui sont adaptés de manière à ce que la quantité de matière plastique disposée au-dessus d'un plan coïncidant avec la face supérieure de la douille se situe entre 20% et 40% de la masse totale de la dose.

De préférence, le rapport entre la masse de matière au-dessus du plan et la masse de matière au-dessous du plan se situe aux environs de 30/70.

### Description détaillée de l'invention

L'invention sera mieux comprise ci-dessous par la description d'un mode d'exécution de celle-ci et des figures qui s'y rapportent, dans lesquelles :
La figure 1 représente la partie inférieure du moule, ensemble matrice,
la figure 1a une variante du mode d'exécution de la figure 1,
la figure 2 représente une buse de dosage ouverte formant une dose de matière plastique dans la partie inférieure du moule,
la figure 3 représente une buse de dosage fermée et dose en place dans la partie inférieure du moule,
la figure 4 correspond à la figure 3 mais avec tige d'orifice de petit diamètre,
la figure 5 correspond à la figure 3 mais avec tige d'orifice de grand diamètre,
la figure 6 représente le mandrin et l'ensemble matrice au début de la phase de compression et
la figure 7 représente la fin de la phase de compression.
la figure 8 illustre la façon dont la dose est déposée sur la douille.

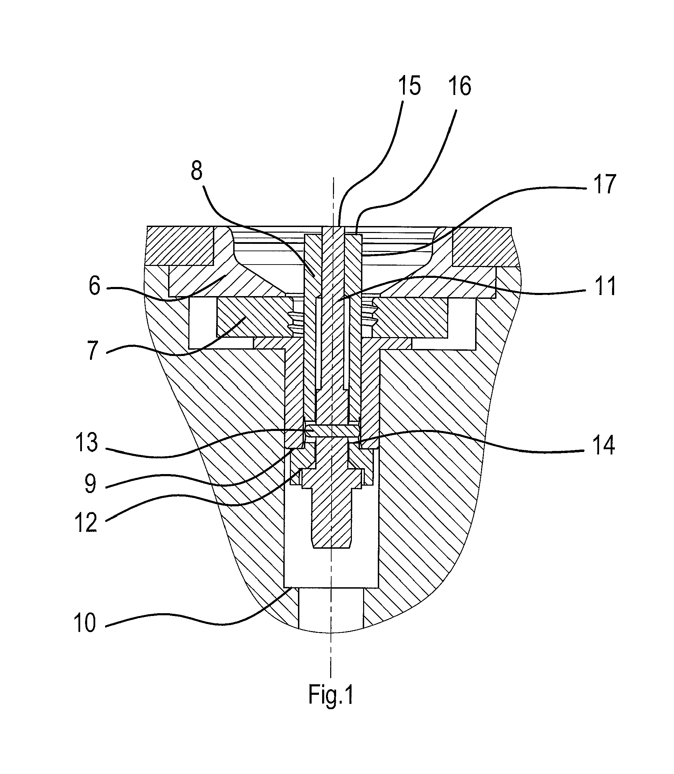

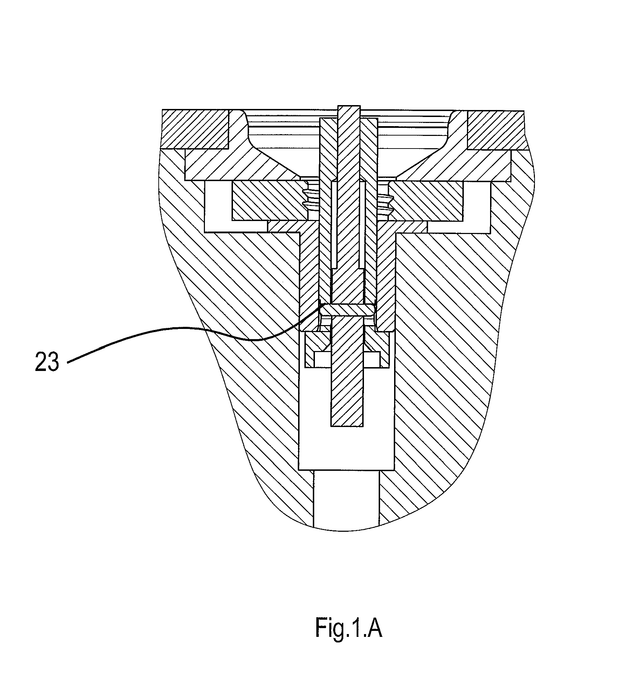

La figure 1 représente la partie inférieure du moule en position de repos, appelée ensemble matrice, comprenant une matrice d'épaule **6** qui va former la partie extérieure de la tête de tube, une matrice de filetage **7** en plusieurs parties pour permettre le démoulage du filetage et, dans l'axe de symétrie du dispositif, une douille **8** pouvant se déplacer en translation selon l'axe A. La douille **8** comporte un premier épaulement **8a** qui limite sa course entre deux butées **9** et **10.**

L'ensemble matrice comprend également une tige d'orifice **11** qui est utilisée pour former l'orifice de l'épaule. La tige d'orifice **11** comporte un épaulement **24** dans sa partie inférieure et peut coulisser dans la douille **8.** La course de la tige d'orifice **11** est limitée en position haute au moyen de l'épaulement **24** et d'une butée **12** disposée sur la douille. La course de la tige d'orifice **11** est également limitée en position basse au moyen par une goupille **13,** par exemple de forme cylindrique, et d'une butée **14** disposée sur la douille **8 ,** la butée **14** étant formée par la paroi inférieure d'un trou oblong **8b** dans ladite douille **8.** La goupille **13** est de préférence placée, par exemple chassée, perpendiculairement dans un trou dans la tige **11.** Cette goupille permet de bloquer de façon franche le déplacement relatif dans le sens axial de la tige **11** et de la douille **8.** Ce blocage a particulièrement de l'importance une fois que la dose de matière a été déposée et que le mandrin est en contact avec la face supérieure de la tige, pour former l'épaule. Dans les système connus utilisant des ressorts, dans une telle position, la tige pouvait encore se déplacer, notamment sous l'effet de la matière qui est moulée par compression dans ce procédé et ainsi donner lieu à des défauts, comme par exemple un orifice bouché ou déformé.

La figure 1A présente une variante du dispositif de la figure **1** dans lequel l'épaulement **24** de la tige d'orifice **11** est supprimé et la butée haute **23** est réalisée par le contact de la goupille cylindrique **13** sur la paroi supérieure du trou oblong 8b. Cette variante présente l'avantage d'une grande simplicité de fabrication et de mise en oeuvre. En utilisant une seule goupille pour les deux butées **14,23 ,** on simplifie la construction du dispositif.

Les déplacements relatifs de la douille **8** et de la tige d'orifice **11** sont réalisés par un actionneur (non représenté) tel que ressort ou vérin pneumatique) agissant sur la tige d'orifice **11.**

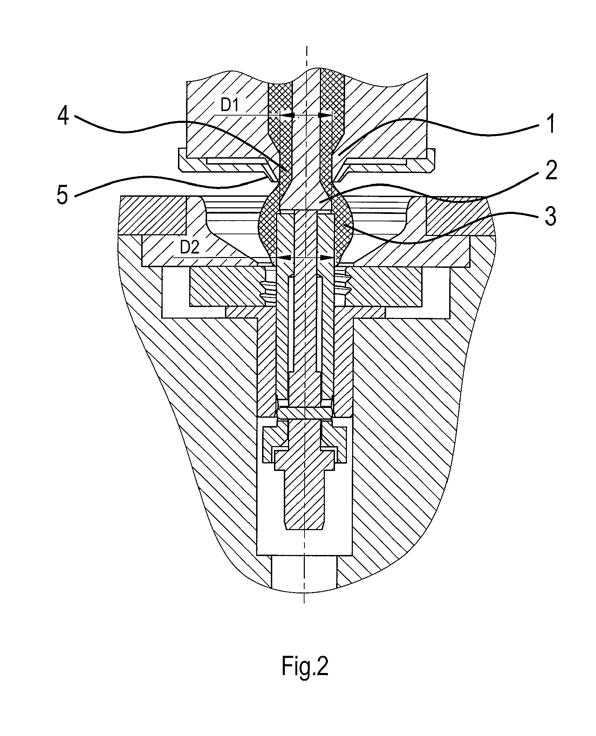

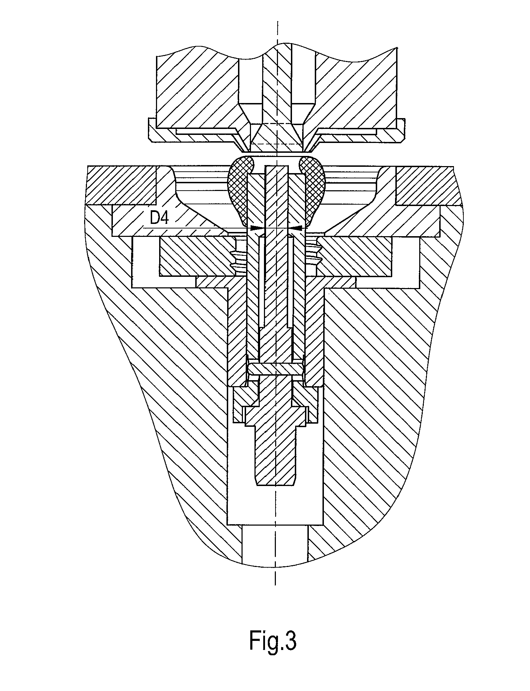

Dans les figures 2 et 3, on a représenté les étapes de dépose d'une dose de matière plastique fondue. Une buse de dosage **1,** positionnée au dessus de la matrice **6** et concentrique à la douille **8,** forme une dose **3** de matière plastique fondue. La buse de dosage **1** est alimentée par une extrudeuse (non illustrée) connue dans l'état de la technique.

Dans la figure 2, la soupape **2** effectue une course linéaire engendrée par un actionneur (non illustré) ce qui permet la formation d'une dose annulaire **3** à travers le passage **4** et sa dépose sur la face supérieure **16** et la périphérie **17** de la douille **8.**

Dans la figure 3, l'actionneur entraîne ensuite la soupape **3** en sens inverse ce qui provoque la fermeture de l'orifice de sortie **4.** La dose de matière plastique est coupée et décollée par soufflage d'un gaz au travers du passage **5.**

Pour que la dose de matière plastique **3** soit correctement déposée sur la douille **8** tel que l'illustre la figure 3, c'est-à-dire pour qu'elle soit en contact avec sa face supérieure **16** et sa périphérie **17,** il faut réunir plusieurs conditions:
- La distance entre la face supérieure **15** de la tige d'orifice **11** et la face supérieure **16** de la douille **8** doit être légèrement supérieure à l'épaisseur de paroi correspondante de la pièce moulée (tête de tube).
- La soupape **2** doit être très proche ou de préférence entrer en contact avec la surface **15** de la tige d'orifice **11.**
- Le diamètre de la soupape **2** est choisi en fonction du diamètre de la douille **8.**

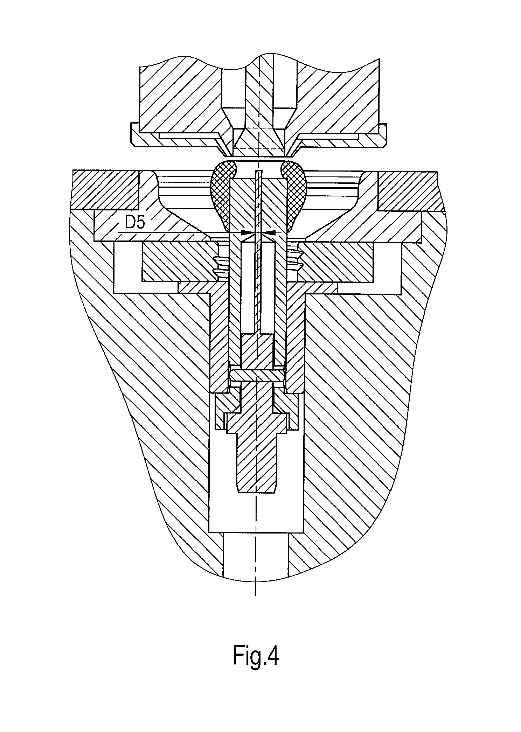

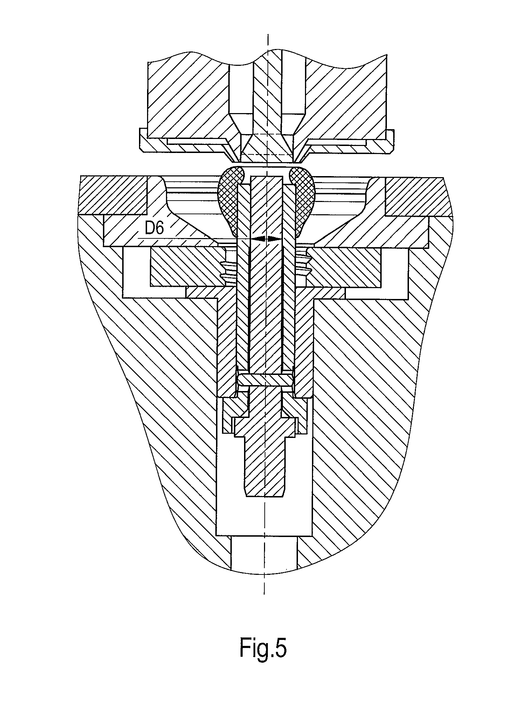

Dans le cas de cette invention, la dose est déposée sur la douille **8** (sur la face supérieure **16** et sur la périphérie **17).** Elle est donc bien centrée et ne va pas se déplacer lors des mouvements des outillages. Les défauts de moulage seront éliminés. D'autre part si pour un même diamètre de tube le diamètre de l'orifice varie on peut conserver le même diamètre de soupape de dosage car le diamètre de la douille **8** reste identique (voir Fig.4 petit orifice (D5), Fig.5 gros orifice (D6)). Dans les usines de production de tubes cosmétiques, il est courant qu'une ligne produise un tube toujours de même diamètre mais avec des changements fréquents du diamètre de l'orifice. L'invention permet donc de gagner du temps dans les changements d'outillages car cela évite les changements de diamètre de la buse de dosage ainsi que les nouveaux réglages de celle-ci. D'autre part cela permet de réduire la plage de diamètres de buses de dosage nécessaire pour la production d'une gamme de diamètres de tubes. (p. ex. s'il fallait 6 buses différentes, le nouveau procédé ne nécessitera que 3 diamètres différents).

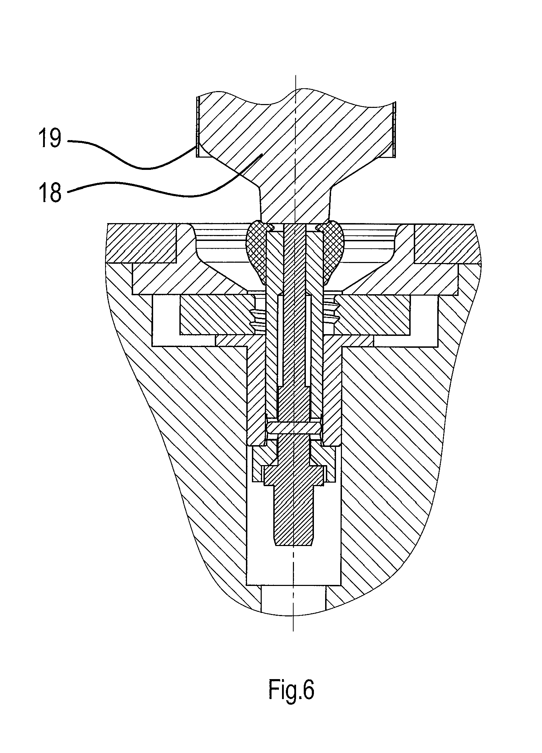

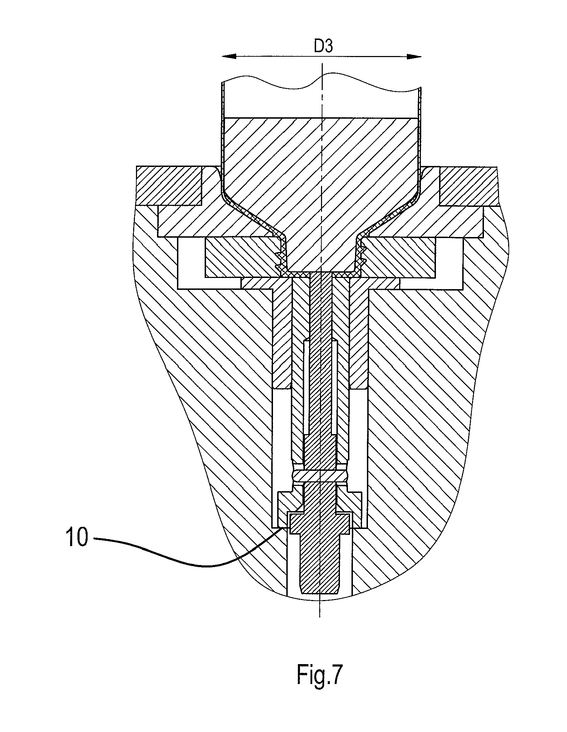

Dans l'étape suivante représentée à la figure 6, la matrice **4** a quitté la buse de dosage **1** et un mandrin **18** est centré avec celle-ci. Le corps cylindrique du tube **19** est emmanché en position sur le mandrin **18.** Le mandrin **18** se déplace vers la matrice **6** et vient au contact de la tige d'orifice **8** sur sa face supérieure. Il entraîne alors l'ensemble tige d'orifice **11** et la douille **8** jusqu'à ce que celle-ci vienne contre la butée **10** (voir la figure 7). Au terme de ce déplacement, la goupille cylindrique **13** contacte la butée inférieure **14,** ce qui garantit que la face inférieure du mandrin **18** ne vienne jamais en contact avec la surface **16** de la douille **8.** Cette configuration présente l'avantage de bien former l'orifice du tube autour de la tige d'orifice **11.** La dose de matière plastique **3** est déformée progressivement jusqu'à ce qu'elle remplisse la cavité formée par l'ensemble matrice et le mandrin **18** et vienne se souder à l'extrémité du corps de tube **19.** L'ensemble reste sous pression pendant la phase de refroidissement.

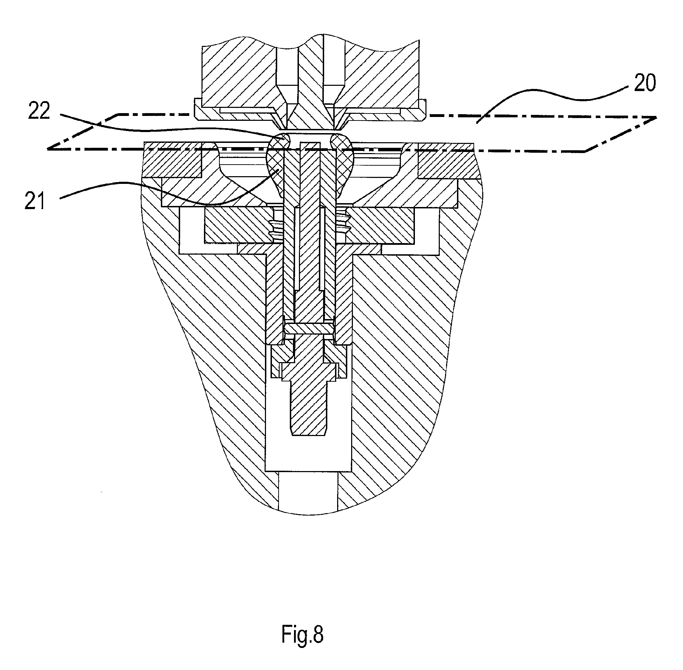

La figure 8 représente le même dispositif et la même configuration que le dispositif et la configuration illustrées sur la figure 3, elle diffère uniquement de cette dernière en ce que l'on illustre la façon dont la dose **3** est déposée sur la douille **8.**
La matière plastique constituant la dose **3** se trouve à la fois sur la face supérieure **16** et sur la paroi latérale **17** de la douille **8.**

La quantité de matière plastique disposée le long ou dans le prolongement de la paroi latérale **17** de la douille **8** est beaucoup plus importante que la quantité de matière plastique disposée au-dessus de la face supérieure **16** de la douille **8.**
Cependant, la présence de matière plastique au-dessus de la face supérieure **16** de la douille **8** présente plusieurs avantages, notamment le fait de retenir efficacement la dose **3** dans une position déterminée. Le risque d'abaissement prématuré de la dose **3** le long de la douille **8** est donc éliminé. On relèvera ici que ce risque est présent dans le dispositif divulgué dans la demande de brevet allemand DE 103 49 837 car ici, l'intégralité de la dose se situe sur la paroi latérale de la douille.
De manière surprenante, on a constaté que la qualité des articles moulés était améliorée si l'on répartissait d'une certaine manière la matière plastique entre les zones qui se situent respectivement au-dessus et au-dessous d'un plan **20** coïncidant avec la face supérieure de la douille **8 .** Plus précisément, la qualité des articles moulés est améliorée si la quantité de matière plastique **22** se trouvant au dessus du plan **20** représente entre 20 et 40 % de la masse totale de la dose **3** et si la quantité de matière plastique **21** se trouvant au-dessous du plan **20** représente respectivement entre 80 et 60 % de la masse totale de la dose **3 .** De préférence, le rapport masse supérieure/masse inférieure se situe aux environs de 30/70.

## Revendications

1. Dispositif de moulage d'un article en matière plastique dans lequel l'article est obtenu par la compression d'une dose de matière plastique (3) à l'état fondu entre les deux parties d'un moule, comprenant au moins une alimentation de matière plastique (1), une tige (11) coulissant dans une douille (8) adaptée pour supporter temporairement ladite dose de matière plastique (3), un moule de tête d'article (6,7), un mandrin (18) coopérant avec ledit moule (6,7), la douille (8) comportant une face supérieure (16) et une paroi latérale (17) ; le dispositif étant **caractérisé par le fait qu'**il comprend des moyens de dépôt de la dose sur la douille (1,2) qui sont adaptés de manière à ce que la quantité de matière plastique (22) disposée au-dessus d'un plan (20) coïncidant avec la face supérieure (16) de la douille (8) se situe entre 20% et 40% de la masse totale de la dose (3).

2. Dispositif selon la revendication précédente **caractérisé en ce que** ce que le rapport entre la masse de matière (22) au-dessus du plan (20) et la masse de matière (21) au-dessous du plan (20) se situe aux environs de 30/70.

3. Ensemble constitué d'un dispositif tel que défini dans une quelconque des revendications précédentes et d'une dose de matière plastique (3) disposée temporairement sur l'extrémité libre de la douille (8), **caractérisé par le fait que** la quantité de matière plastique (22) disposée au-dessus d'un plan (20) coïncidant avec la face supérieure de la douille (8) se situe entre 20% et 40% de la masse totale de la dose (3).

4. Ensemble selon la revendication précédente **caractérisé par le fait que** le rapport entre la masse de matière (22) au-dessus du plan (20) et la masse de matière (21) au-dessous du plan (20) se situe aux environs de 30/70.

5. Procédé de moulage d'une dose de matière plastique (3) au moyen d'un dispositif tel que défini dans la revendication 1 ou 2 **caractérisé par** le fait la dose (3) est déposée sur la face supérieure (16) et sur la paroi latérale (17) de la douille (8) de manière à ce que la quantité de matière plastique (22) disposée au-dessus d'un plan (20) coïncidant avec la face supérieure de la douille (8) se situe entre 20% et 40% de la masse totale de la dose (3).

6. Procédé selon la revendication précédente **caractérisé en ce que** le rapport entre la masse de matière (22) au-dessus du plan (20) et la masse de matière (21) au-dessous du plan (20) se situe aux environs de 30/70.
